# EUROPEAN PATENT APPLICATION

(11) **EP 3 054 034 A1**
(43) Date of publication of application: **10.08.2016**
(21) Application number: 15163687.5
(22) Date of filing: 15.04.2015
(51) Int. Cl.: C25B 1/10, C25B 9/08, H01M 8/083, H01M 10/26

(54) **AMINE-CONTAINING ELECTROLYTE FOR ELECTROCHEMICAL DEVICES**

(30) Priority: 06.02.2015 WO PCT/IB2015/000118
(71) Applicant: Ginkgo Investments Limited, London SW10 0QD (GB)
(72) Inventor: Rota, Antonio, 42021 Bibbiano, REGGIO EMILIA (IT)
(74) Representative: Eterno, Enrico

(57) **Abstract**

Electrochemical device (1) comprising a device casing (2) delimiting at least an inner compartment (4), half-cells (6, 8) at least partially housed in said compartment (4), at least an anionic exchange membrane (10), dividing said half-cells (6, 8) and comprising cationic groups, and an electrolyte water solution, electrically connecting the half-cells (6, 8) across said membrane (10) and comprising at least a water soluble organic amine.

The invention relates also to an electrolyte water solution, and to the use of such a solution.

## Description

### FIELD OF THE INVENTION

The invention relates to electrochemical devices, and to the design of an aqueous electrolytic solution containing an organic alkali, to be used in electrochemical devices, such as electric accumulators, fuel cells or electrolyzers.

### STATE OF THE ART

The main problem associated to the use of energy obtained from renewable sources is its storage, in order to use it in a place or at a time different from that of the production site. The production of hydrogen is a valid alternative to the use of batteries, which are often unreliable, especially after prolonged inactivity, and are made of materials scarcely naturally available, such as Lithium.

Membrane electrolysers are constituted by a polymeric ion exchange membrane that separates the two half-cells. In these devices it is possible to obtain gases of higher purity than those obtained from industrial electrolysers, containing semi-permeable septa.

Although membrane-based electrolysers have a great use prospective, they have still many drawbacks: electrolysers operating in acid environment contain noble metals as catalyst for both anodic and cathodic reactions. Due to the reduced availability of the precious raw materials, this type of acid electrolysers cannot become a widespread technology.

An interesting alternative to these devices are alkaline electrolyser, whose electrodes contains no-noble metals, such as that described by Santana Campos Rodrigues in WO2014126489.

One of the most interesting system is the one disclosed by A. Tampucci et al. in WO2011004343. The inventors claim an alkaline electrolyser whose cathodic half-cell does not contain any water solution. In such a way, the produced hydrogen is dry and directly pressurized, without any further purification or compression step. Their alkaline electrolytic solution contains inorganic alkaline or alkaline earth metal.

A similar alkaline solution is used by Lianghu Zhang et al. in the publication CN201942756.

However, these devices have many technical inconveniences that causes their malfunctioning and, after few months, their failure. These problems are related to the alkaline and very caustic electrolyte usually used in it.

The main failure cause is the "Hofmann elimination" reaction: it occurs to quaternary ammonium end groups in strong alkaline environment.

Usually the majority of anionic exchange membranes (AEM) contains the above-mentioned chemical groups and a strong alkaline environment causes ammonium group elimination, causing the rapid decrease of anionic exchange capability.

Many literature articles, such as J.R. Varcoe et al. in Energy Environ. Sci., 2014, 7, 3135-3191, describe this phenomenon and suggest, as possible solution, the change of membrane chemical structure, using conductive groups without β-hydrogen, such as aromatic or cyclic amine. However, this solution limits considerably the amount of available structures, and reduces the possibility of increasing ionic conductivity and membrane efficiency.

Another technical drawback associated to the presence of a strong alkaline media is the corrosion of stainless steel components. Usually stainless steel is not affected significantly by corrosion mechanism. However the combination of
- prolonged contact to the alkaline solution,
- working temperature higher than 50°C
- the presence of electrochemical reactions and the continuous synthesis of oxygen, due to the electrolysis process reduces steel resistance, causing many inconveniences. First of all the mechanical resistance of the components. Furthermore, the corrosion phenomenon cause Cr(VI) formation. The presence of Cr(VI) must be avoided, due to its carcinogenic behaviour.

### SUMMARY OF THE INVENTION

The purpose of this invention is the increase of reliability of electrochemical devices operating in alkaline environment, avoiding anionic membrane and stainless steel components degradation, without any component modification or pre-treatment. The inventor made this possible designing a new type of electrolytic alkaline solution, which does not cause the problem above described, and suitable for all membranes containing quaternary ammonium groups.

This invention allows to overcome the problems associated with the currently commercially available alkaline devices, which suffer of long term failure, due to membrane degradation and steel components corrosion.

The proposed solution is based on an aqueous electrolyte containing organic amine that, preferably, has a logarithmic acid dissociation constant pKa equal to or higher than 9,5. The structure and the alkalinity of the organic amine avoid both Hofmann elimination and steel corrosion. Furthermore, organic amines act as shielding agent that inhibit Cr(VI) formation.

### BRIEF DESCRIPTION OF THE DRAWING

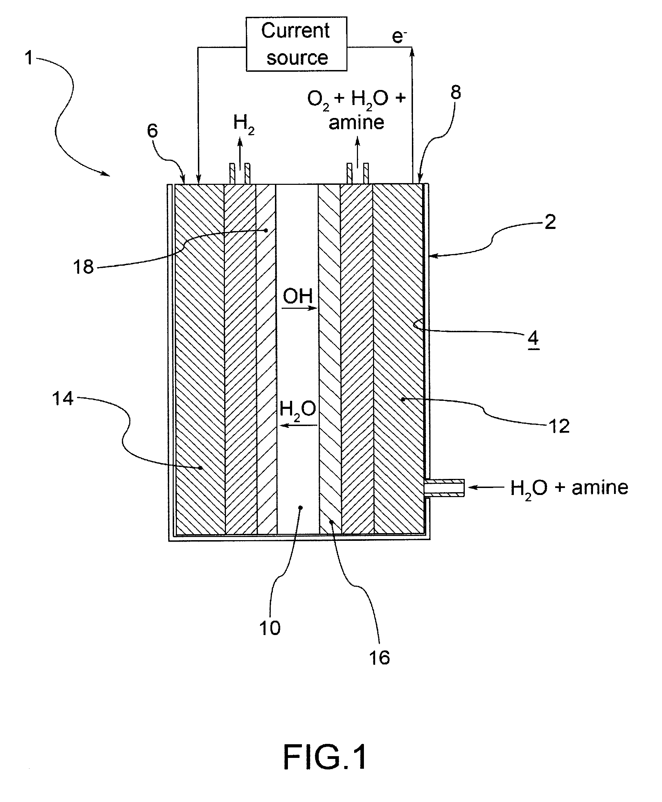

The scope of the present invention will now be described in detail with the aid of the attached figure 1 that shows an electrochemical device object of the present invention, according to a possible embodiment.

### DETAILED DESCRIPTION OF THE INVENTION

With reference to the enclosed drawings, reference sign 1 globally indicates an electrochemical device comprising a device casing 2 delimiting at least an inner compartment 4, and half-cells 6, 8 at least partially housed in said compartment 4.

According to different embodiments, electrochemical device 1 is or comprises an electric accumulator, a water electrolyzer or a fuel cell.

Said electrochemical device comprises least an anionic exchange membrane 10, dividing said half-cells 6, 8 and comprising cationic groups, and an electrolyte water solution, electrically connecting the half-cells 6, 8 across said membrane 10. The electrolyte water solution comprises at least a water soluble organic amine.

According to a preferred embodiment (see e.g. figure 1), said electrochemical device comprises or consists of an alkaline membrane electrolyzer. Such device is a very powerful tool for the production of pure hydrogen, using affordable raw materials. Since such an electrolyzer can be easily connected to renewable power sources, the widespread of this technology has huge opportunities. However many technical drawbacks need still to be fixed, in order to guarantee a reliable long term functioning.

In order to obtain pure gases, the two half cells 6, 8 are divided by the anionic exchange membrane 10, which contains the above mentioned cationic groups. These groups preferably comprise or consist of quaternary ammonium salts. In strong alkaline media quaternary ammonium end groups react with OH⁻, causing their elimination as tertiary amine, according to the chemical mechanism known as "Hofmann elimination".

The elimination of these cationic groups causes the removal of conductive groups, and therefore the progressive decrease of membrane conductivity and its mechanical failure.

The inventor has surprisingly found a solution to the above described problem, without any significant decrease of electrochemical / electrolyzer performances.

It was found that at least a water soluble organic amine can replace at least part of inorganic alkaline media (traditionally: strong inorganic bases), without any detrimental effect on electrochemical characteristics.

Without being bound to a particular theory, it is believed that Hofmann elimination occurs by E2 elimination, which requires strong bases not sterically hindered. This elimination occurs when the alkaline media used as anionic electrolyte is a strong inorganic base, such as NaOH, KOH, K₂CO₃, etc. On the contrary, an organic amine is usually too large in order to approach to the hydrogen in β-position to the amino nitrogen. Not being able to remove the hydrogen, the global mechanism of E2 elimination cannot take place, thereby avoiding the removal of the quaternary amine.

According to an advantageous embodiment, the electrolyte water solution is free from inorganic strong alkaline bases as electrolytes, so as to reduce/avoid Hofmann elimination of said cationic groups.

According to different embodiments, the water soluble organic amine could comprise a primary, a secondary, a tertiary or a quaternary amine, or mixtures thereof, said quaternary amine having hydroxide as an optional counter-ion.

Preferably, the water soluble organic amine could be selected from the group consisting of guanidine, dimethylguanidine, trimethylguanidine, tetramethylguanidine, dimethylamine, diethylamine, dibuthylamine, diisopropylamine, tetramethylguanidine monoquaternarized, tetramethylguanidine diquaternarized, piperazine, piperazione quaternarized, trimethylbenzylamine quaternarized, polyvinylbenzyltrimethylammonium hydroxide, and mixtures thereof.

Preferably, the logarithmic acid dissociation constant pKa of said amine is equal to or higher than 9,5.

According to a particularly advantageous embodiment, the weight of said at least one organic amine solved in the electrolyte water solution ranges between 0,5-10%wt, said water being preferably demineralized water.

In the case of more than one amine, their total concentration is between 0,5-10% by weight. The remaining part is preferably, also in this embodiment, demineralized water.

The electrochemical device is advantageously characterized in being configured to operate between -10°C and 80°C, without any significant change of electrolytic solution stability.

Also, advantageously, the inner compartment 4 is pressurized and the device casing 2 is pressure-resistant.

As an example, at least part of the device casing 2 and/or of an anode 12 or cathode 14 making part of said half-cells 6, 8 is of a stainless steel, e.g. an AISI 316 steel.

According to a further variation, the half-cells 6, 8 comprise an anode 12 and a cathode 14, one or both being at least partly coated 16, 18 with a foam-supported catalyst, e.g. nickel. In relation to such catalyst, see example 1.

Another interesting advantage that the inventor discovered in the use of an amine is the inhibition of Cr(VI) formation. Structural components of the electrolytic devices (such as walls of the casing, anode and/or cathode) are preferably made of stainless steel, in order to guarantee chemical and structural stability, even at high pressures.

However, in strong alkaline solution (such as those containing traditional inorganic bases), the passivation film which protect the steel from corrosion is rapidly dissolved, due to chromium oxidation by the oxygen formed during electrolysis process. This phenomenon causes two kind of problems: the first is steel embrittlement, and therefore mechanical failure of steel components. The second is the synthesis of highly toxic and carcinogenic compounds, such as Cr₂O₇²⁻ or CrO₄²⁻.

Since the alkalinity of organic amines is not as strong as alkalinity of inorganic alkali, the inventor discovered that the chemical environment that contacts steel parts of device 1 does not promote chromium oxidation.

Therefore the use of an electrolytic solution containing organic amine protects both the anionic exchange membrane and the steel components of the device, when such parts are foreseen.

The present invention relates also to an electrolyte water solution comprising at least a water soluble organic amine and free or devoid from inorganic strong alkaline bases as electrolytes, the logarithmic acid dissociation constant pKa of said amine being preferably equal to or higher than 9,5.

In relation to preferred or advantageous embodiments of such solution, reference is made to the previous description.

At last, the present invention relates to the use of at least a water soluble organic amine for the preparation of an electrolyte water solution for electrochemical devices, such as the device according to any of the previous claims, the logarithmic acid dissociation constant pKa of said amine being preferably equal to or higher than 9,5.

This invention will be better understood in light of the following non-limiting examples of the invention.

### EXAMPLE 1 - Assembly of an electrochemical cell for water electrolysis

The cells used to test the behaviour of the electrolytic solutions have been made assembling, in a stainless steel frame, the anodic half-cell (containing the anodic catalyst, applied onto nickel foam as support), an anion-exchange membrane (thickness: 20 microns, ion exchange capacity: 1.8 meq/g) and the cathode half-cell (containing the cathodic catalyst, applied onto nickel foam as support).

Anode and cathode contain the same catalyst, whose synthesis is below reported:
10 g of Ni Raney (Sigma Aldrich) are immersed in a solution of KOH 10 wt% for 8h, then washed to neutrality with distilled water. 1.5 g of a solution of Teflon 60 wt% (Sigma Aldrich) are then added to this powder, to obtain a catalyst paste.
0.2 g of this paste are applied on nickel foam support (size: 6 cm²). The obtained electrodes are then heated at 300 °C for 1h, in inert atmosphere.

### EXAMPLE 2 - Electrochemical properties using KOH as electrolyte

An aqueous solution containing KOH 1 wt% was continuously recirculated to the anodic half-cell of an electrochemical cell made according to Example 1. The cathodic half-cell is dry.

The electrochemical data observed at the beginning of the test are:
current i = 500 mA/cm2 voltage V = 1.83 volts T = 20 °C
current i = 500 mA/cm2 voltage V = 1.78 volts T = 50 °C

The electrochemical data observed after 12 days of continuous running are:
current i = 500 mA/cm2 voltage V = 1.86 volts T = 20 °C
current i = 500 mA/cm2 voltage V = 1.81 volts T = 50 °C

### EXAMPLE 3 - Electrochemical properties using guanidine as electrolyte

An aqueous solution containing guanidine 1 wt% was continuously recirculated to the anodic half-cell of an electrochemical cell made according to Example 1. The cathodic half-cell is dry.

The electrochemical data observed at the beginning of the test are:
current i = 500 mA/cm2 voltage V = 1.84 volts T = 20 °C
current i = 500 mA/cm2 voltage V = 1.79 volts T = 50 °C

The electrochemical data observed after 12 days of continuous running are:
current i = 500 mA/cm2 voltage V = 1.84 volts T = 20 °C
current i = 500 mA/cm2 voltage V = 1.79 volts T = 50 °C

### EXAMPLE 4 - Electrochemical properties using diquaternarized tetramethylguanidine as electrolyte

An aqueous solution containing diquaternarized tetramethylguanidine 1 wt% was continuously recirculated to the anodic half-cell of an electrochemical cell made according to Example 1. The cathodic half-cell is dry.

The electrochemical data observed at the beginning of the test are:
current i = 500 mA/cm2 voltage V = 1.80 volts T = 20 °C
current i = 500 mA/cm2 voltage V = 1.75 volts T = 50 °C

The electrochemical data observed after 12 days of continuous running are:
current i = 500 mA/cm2 voltage V = 1.80 volts T = 20 °C
current i = 500 mA/cm2 voltage V = 1.75 volts T = 50 °C

### EXAMPLE 5 - Electrochemical properties using polyvinylbenzyltrimethyl ammonium hydroxide as electrolyte

An aqueous solution containing polyvinylbenzyltrimethyl ammonium hydroxide 1 wt% was continuously recirculated to the anodic half-cell of an electrochemical cell made according to Example 1. The cathodic half-cell is dry.

The electrochemical data observed at the beginning of the test are:
current i = 500 mA/cm2 voltage V = 1.85 volts T = 20 °C
current i = 500 mA/cm2 voltage V = 1.80 volts T = 50 °C

The electrochemical data observed after 12 days of continuous running are:
current i = 500 mA/cm2 voltage V = 1.85 volts T = 20 °C
current i = 500 mA/cm2 voltage V = 1.80 volts T = 50 °C

### EXAMPLE 6 - Membrane Ion exchange capacity after prolonged use

A membrane with an ion exchange capacity (IEC) of 1.8 meq/g and a thickness of 20 microns was immersed for 30 days in a aqueous solution containing KOH 1 wt%. After this treatment the measured ion exchange capacity was 1.48 meq/g (IEC loss: 18%).

A membrane with the same characteristics was immersed for 30 days in an aqueous solution containing guanidine 1 wt%. After such period, no ion exchange capacity changes were recorded.

### EXAMPLE 7 - Corrosion of stainless steel components.

The structural components of the electrolytic cell described in Example 1 are made by AISI 316 stainless steel.

After 30 days of running with an aqueous solution containing KOH 1 wt%, T = 50 °C, the formation of an opaque surface was observed, whereas the metal was in contact with the alkaline solution. The alkaline solution became pale green.

After 30 days of operation with an aqueous solution containing guanidine 1 wt%, T = 50 °C, the surface in contact with the alkaline solution did not show any gloss change. The alkaline solution remained colourless.

Even if not previously specified, a person skilled in the art may, using the expertise typical of the sector, vary or replace some of the aspects described above with other technically equivalent ones.

These variations or replacements also fall within the scope of protection defined by the following claims.

In addition, any alternative shown in relation to a particular embodiment may be realised independently of the other variations described.

## Claims

1. Electrochemical device (1) comprising:
- a device casing (2) delimiting at least an inner compartment (4);
- half-cells (6, 8) at least partially housed in said compartment (4);
- at least an anionic exchange membrane (10), dividing said half-cells (6, 8) and comprising cationic groups;
- an electrolyte water solution, electrically connecting the half-cells (6, 8) across said membrane (10) and comprising at least a water soluble organic amine.

2. Electrochemical device according to claim 1, wherein the electrolyte water solution is free from inorganic strong alkaline bases as electrolytes, so as to reduce/avoid Hofmann elimination of said cationic groups.

3. Electrochemical device according to any of the previous claims, wherein the water soluble organic amine has a logarithmic acid dissociation constant pKa equal to or higher than 9,5.

4. Electrochemical device according to any of the previous claims, wherein the weight of said at least one organic amine solved in the electrolyte water solution ranges between 0,5-10%wt, said water being preferably demineralized water.

5. Electrochemical device according to any of the previous claims, wherein the water soluble organic amine comprises a primary, a secondary, a tertiary or a quaternary amine, or mixtures thereof, said quaternary amine having hydroxide as an optional counter-ion.

6. Electrochemical device according to any of the previous claims, wherein the water soluble organic amine is selected from the group consisting of guanidine, dimethylguanidine, trimethylguanidine, tetramethylguanidine, dimethylamine, diethylamine, dibuthylamine, diisopropylamine, tetramethylguanidine monoquaternarized, tetramethylguanidine diquaternarized, piperazine, piperazione quaternarized, trimethylbenzylamine quaternarized, polyvinylbenzyltrimethylammonium hydroxide, and mixtures thereof.

7. Electrochemical device according to any of the previous claims, wherein the cationic groups comprise or consist of quaternary ammonium salts.

8. Electrochemical device according to any of the previous claims, **characterized in** being configured to operate between -10°C and 80°C.

9. Electrochemical device according to any of the previous claims, wherein at least part of the device casing (2) and/or of an anode (12) or cathode (14) making part of said half-cells (6, 8) is of a stainless steel.

10. Electrochemical device according to the previous claim, wherein said stainless steel is an AISI 316 steel.

11. Electrochemical device according to any of the previous claims, wherein the half-cells (6, 8) comprise an anode (12) and a cathode (14), one or both being at least partly coated (16, 18) with a foam-supported catalyst, e.g. nickel.

12. Electrochemical device according to any of the previous claims, wherein the inner compartment (4) is pressurized and the device casing (2) is pressure-resistant.

13. Electrolyte water solution comprising at least a water soluble organic amine and free from inorganic strong alkaline bases as electrolytes, the logarithmic acid dissociation constant pKa of said amine being preferably equal to or higher than 9,5.

14. Use of at least a water soluble organic amine for the preparation of an electrolyte water solution for electrochemical devices, such as the device according to any of the previous claims, the logarithmic acid dissociation constant pKa of said amine being preferably equal to or higher than 9,5.
